# EUROPÄISCHE PATENTSCHRIFT

(11) **EP 3 793 863 B1**
(45) Veröffentlichungstag und Bekanntmachung des Hinweises auf die Patenterteilung: **15.01.2025**
(21) Anmeldenummer: 19724142.5
(22) Anmeldetag: 08.05.2019
(51) Int. Cl.: B60Q 3/72, B60Q 3/80, F21V 14/00, B60Q 3/47, B60Q 3/74

(54) **VERFAHREN UND SYSTEM ZUM EINSTELLEN VON LICHTVERHÄLTNISSEN EINES FAHRZEUGS UND FAHRZEUG**
METHOD AND SYSTEM FOR SETTING LIGHTING CONDITIONS IN A VEHICLE, AND VEHICLE
PROCÉDÉ ET SYSTÈME DE RÉGLAGE DES CONDITIONS D'ÉCLAIRAGE D'UN VÉHICULE ET VÉHICULE

(30) Priorität: 17.05.2018 DE 102018207754
(43) Veröffentlichungstag der Anmeldung: 24.03.2021
(73) Patentinhaber: VOLKSWAGEN AKTIENGESELLSCHAFT, 38440 Wolfsburg (DE)
(72) Erfinder: SCHADE, Tobias, 10247 Berlin (DE); MIEMIETZ, Stefan, 14612 Falkensee (DE)
(74) Vertreter: Clarenbach, Carl-Philipp
(86) Internationale Anmeldenummer: PCT/EP2019/061756
(87) Internationale Veröffentlichungsnummer: WO 2019/219459

(56) Entgegenhaltungen:
- EP-B1- 3 274 620
- DE-A1- 10 006 943
- DE-A1- 10 128 868
- DE-A1- 102005 024 640
- DE-A1- 102008 043 601
- DE-A1- 102009 010 508
- DE-A1- 102012 001 017
- DE-A1- 102012 001 051
- DE-A1- 102012 002 564
- DE-A1- 102012 010 890
- DE-A1- 102013 001 258
- DE-A1- 102013 016 817
- DE-A1- 102013 210 097
- DE-A1- 102014 017 337
- DE-A1- 102015 225 890
- DE-A1- 102016 006 847
- DE-A1- 102016 213 629
- DE-A1- 102016 215 593
- DE-A1- 102017 001 239
- DE-A1- 102017 121 968
- DE-U1- 202018 102 470
- FR-A1- 3 041 206
- FR-A1- 3 056 496
- JP-A- 2003 072 463
- JP-A- 2008 084 802
- JP-A- 2015 221 655
- JP-A- 2019 055 680
- KR-A- 20120 051 810
- US-A1- 2016 129 832
- US-A1- 2017 217 367
- US-A1- 2017 332 010
- US-A1- 2018 272 932

## Beschreibung

Die Erfindung betrifft ein Verfahren zum Einstellen von Lichtverhältnissen eines Fahrzeugs. Dabei wird einer Steuereinrichtung ein Beleuchtungssollwert in einem Innenraum des Fahrzeugs vorgegeben. In einem weiteren Verfahrensschritt wird Licht von zumindest einer Lichtquelle in Abhängigkeit von dem durch die Steuereinrichtung vorgegebenen Beleuchtungssollwert ausgegeben. In einem weiteren Verfahrensschritt wird ein aktueller Beleuchtungswert in dem Innenraum mittels einer Erfassungseinrichtung erfasst. Ferner wird der aktuelle Beleuchtungswert auf den vorgegebenen Beleuchtungssollwert angepasst, wenn eine Abweichung des aktuellen Beleuchtungswertes von dem vorgegebenen Beleuchtungssollwert erfasst wird. Zu der Erfindung gehört auch ein System, welches nach dem erfindungsgemäßen Verfahren betreibbar ist, sowie ein Fahrzeug mit einem solchen System.

Der Blick von Passagieren in einem Fahrzeug ist nicht zwingend nach außen in die Umgebung gerichtet. Mit der stetig zunehmenden Anzahl von autonom befahrbaren Strecken, kann sich auch der Fahrer zunehmend alternativen Tätigkeiten im Innenraum des Fahrzeugs widmen, wie zum Beispiel dem Lesen oder dem Entspannen. Im Gegensatz zum heimischen Wohnzimmer sind die Lichtverhältnisse im Innenraum eines fahrenden Fahrzeugs alles andere als konstant. Richtungswechsel, Bebauung und/oder nachts die Scheinwerfer anderer Fahrzeuge und/oder die Straßenbeleuchtung sorgen für unregelmäßige, insbesondere starke, Schwankungen des Innenraumlichts. Bei tief stehender Sonne können Alleebäume einen regelrechten Stroboskopeffekt hervorrufen. Das stört diverse Beschäftigungen oder Tätigkeiten im Innenraum des Fahrzeugs.

In Abhängigkeit von sich ändernden Umgebungsparametern ist es aus dem allgemeinen Stand der Technik bekannt, die Umgebung des Fahrzeugs zu überwachen und damit Geräte im Fahrzeug, wie beispielsweise eine Innenraumbeleuchtung und/oder eine Klimaanlagenregelung, zu steuern.

So beschreibt beispielsweise die DE 103 38 060 A1 eine Sensorvorrichtung für ein Fahrzeug mit wenigstens einem Lichtsensor zum Überwachen einer Umgebung des Fahrzeugs und eine Steuereinheit, welche aus den Messwerten der Lichtintensität des Lichtsensors ein Steuersignal für eine weitere Verwendung generiert.

Ein alternativer Ansatz eine Beleuchtung im Innenraum eines Fahrzeugs zu steuern, wird in der DE 10 2016 203 164 A1 als ein Lichttherapie-Beleuchtungssystem für einen Fahrzeuginnenraum eines Fahrzeugs vorgeschlagen. Das Lichttherapie-Beleuchtungssystem umfasst eine Beleuchtungsvorrichtung mit mindestens einer Lichtquelle, die innerhalb eines Fahrzeuginnenraums angeordnet und dazu ausgebildet ist, einen Nutzbereich innerhalb des Fahrzeuginnenraums zu beleuchten, wenigstens eine Sensoreinheit, die dazu ausgelegt ist, die Beleuchtungsstärke in diesem Nutzbereich zu erfassen, und eine Regeleinheit, die dazu eingerichtet ist, die von der Sensoreinheit erfasste Beleuchtungsstärke von dieser zu empfangen und die Helligkeit der wenigstens einen Lichtquelle der Beleuchtungsvorrichtung so zu regeln, dass die von der Sensoreinheit erfasste Beleuchtungsstärke im Nutzbereich einer Soll-Beleuchtungsstärke entspricht.

Der Nachteil derartiger Vorrichtungen besteht darin, dass diese natürlichen Schwankungen des Lichts im Innenraum nur sehr gering entgegenwirken können. Ferner wirkt die reine Anpassung der Beleuchtungsstärke in dem Innenraum oft unnatürlich, was einen Nutzerkomfort erheblich stören kann.

Die Offenlegungsschriften DE 10 2013 016817 A1, KR 2012 0051810 A, und DE 10 2016 213 629 A1 offenbaren ebenfalls jeweils Verfahren zur Einstellung von Lichtverhältnissen in Fahrzeuginnenräumen. Aus der Offenlegungsschrift DE 10 2017 001239 A1 ist es bekannt, die Leuchtkraft von Scheinwerfern an das Umgebungslicht anzupassen.

Aufgabe der vorliegenden Erfindung ist es daher, ein Verfahren sowie ein System zum Einstellen von Lichtverhältnissen eines Fahrzeugs derart zu verbessern, dass dieses Lichtschwankungen in dem Innenraum des Fahrzeuges besonders zuverlässig entgegenwirkt und damit ein Komfort bei der Nutzung des Fahrzeugs erhöht wird.

Diese Aufgabe wird durch ein Verfahren sowie durch ein System mit den Merkmalen der unabhängigen Patentansprüche gelöst. Vorteilhafte Ausgestaltungen mit zweckmäßigen und nicht trivialen Weiterbildungen der Erfindung sind in den abhängigen Patentansprüchen angegeben.

Zum Lösen dieser Aufgabe schafft die Erfindung ein Verfahren zum Einstellen von Lichtverhältnissen eines Fahrzeugs mit den Merkmalen des Anspruchs 1. Mit "Einstellen" ist insbesondere ein Regeln oder Anpassen oder ein Steuern der Lichtverhältnisse gemeint. Mit "Lichtverhältnisse" sind insbesondere die das Licht betreffende Gegebenheiten oder eine Beleuchtung gemeint. In einem Verfahrensschritt wird einer Steuereinrichtung ein Beleuchtungssollwert in oder für einen Innenraum des Fahrzeugs vorgegeben oder hinterlegt. Mit anderen Worten kann der Steuereinrichtung ein Wert eines Beleuchtungsparameters, welcher insbesondere die Lichtverhältnisse des Fahrzeugs bestimmt, vorgegeben sein, den der Innenraum des Fahrzeugs aufweisen soll. Hierzu kann die Steuereinrichtung beispielsweise einen Speicher aufweisen, in dem der Beleuchtungssollwert gespeichert ist. Die Steuereinrichtung kann ferner beispielsweise als ECU - Electronic Control Unit - ausgebildet sein.

In einem weiteren Verfahrensschritt wird Licht durch zumindest eine Lichtquelle in Abhängigkeit von dem durch die Steuereinrichtung vorgegebenen Beleuchtungssollwert ausgegeben. Mit anderen Worten kann die Steuereinrichtung dazu eingerichtet sein, die zumindest eine Lichtquelle derart anzusteuern, dass durch das von der zumindest einen Lichtquelle ausgegebene oder emittierte Licht der Beleuchtungssollwert in dem Innenraum des Fahrzeugs eingestellt oder erfüllt wird. Mit "Licht" ist insbesondere Licht oder eine Strahlung im sichtbaren Wellenlängenbereich gemeint. Die Steuereinrichtung hat den Vorteil, dass mit dieser die zumindest eine Lichtquelle besonders schnell, zuverlässig und unbegrenzt geschaltet oder angesteuert werden kann.

Besonders bevorzugt kann es vorgesehen sein, dass durch die zumindest eine Lichtquelle ein vorbestimmter Bereich beleuchtet oder ausgeleuchtet wird. Der vorgegebene Beleuchtungssollwert kann sich auf diesen vorbestimmten Bereich beziehen. Mit "vorbestimmter Bereich" ist insbesondere ein Teil des Raums oder Raumbereich oder Raumabschnitt des Innenraums des Fahrzeugs gemeint. Beispielsweise kann es sich bei dem vorbestimmten Bereich um den von der zumindest einen Lichtquelle erzeugten Lichtkegel handeln. Besonders bevorzugt wird durch die zumindest eine Lichtquelle ein Bereich eines Sitzplatzes, wie beispielsweise dem Fahrersitz oder dem Beifahrersitz oder dem Rücksitz, beleuchtet oder ausgeleuchtet. Hierzu kann die zumindest eine Lichtquelle an einem Dachhimmel des Fahrzeugs, insbesondere im Bereich eines Sitzes oder Sitzplatzes, wie beispielsweise dem Fahrersitz oder dem Beifahrersitz oder dem Rücksitz, angeordnet sein.

In einem weiteren Verfahrensschritt kann ein aktueller Beleuchtungswert in dem Innenraum mittels einer Erfassungseinrichtung erfasst werden. Mit anderen Worten kann die Erfassungseinrichtung derart in dem Innenraum positioniert sein, dass die Erfassungseinrichtung den aktuellen Beleuchtungswert in dem Innenraum erfassen oder messen oder aufnehmen kann. Hierzu kann die Erfassungseinrichtung beispielsweise einen oder mehrere Sensoren aufweisen. Der Sensor kann beispielsweise als eine Kamera oder als ein Lichtsensor oder als ein Farbsensor ausgebildet sein. Besonders bevorzugt ist die Erfassungseinrichtung an einem Dachhimmel des Fahrzeugs, insbesondere im Bereich eines Sitzes oder Sitzplatzes, wie beispielsweise dem Fahrersitz oder dem Beifahrersitz oder dem Rücksitz, angeordnet. In vorteilhafter Weise ist die Erfassungseinrichtung neben der zumindest einen Lichtquelle angeordnet. Durch die Erfassungseinrichtung kann der aktuelle Beleuchtungswert in dem Innenraum des Fahrzeugs besonders einfach und zuverlässig erfasst werden.

Anschließend wird der aktuelle Beleuchtungswert auf den vorgegebenen Beleuchtungssollwert eingestellt, wenn eine Abweichung des aktuellen Beleuchtungssollwertes von dem vorgegebenen Beleuchtungssollwert erfasst wird. Mit anderen Worten wird durch die Erfassungseinrichtung und/oder die Steuereinrichtung erfasst, dass der aktuelle Beleuchtungswert nicht mit dem vorgegebenen Beleuchtungssollwert übereinstimmt, so wird der aktuelle Beleuchtungswert angepasst. Hierzu kann die Steuereinrichtung die zumindest eine Lichtquelle ansteuern. Mit anderen Worten kann der aktuelle Beleuchtungswert durch dynamisches Ansteuern der zumindest einen Lichtquelle angepasst werden. Besonders bevorzugt kann die zumindest eine Lichtquelle derart angesteuert oder der aktuelle Beleuchtungswert derart angepasst werden, dass die Lichtverhältnisse in dem Innenraum des Fahrzeugs nahezu konstant gehalten werden können. Dadurch ergibt sich der Vorteil, dass Schwankungen des Lichts oder des aktuellen Beleuchtungswertes im Innenraum durch ein geregeltes Innenraumlicht - die zumindest eine Lichtquelle - ausgeglichen werden können und so der Komfort im Innenraum, insbesondere für den Fahrer und/oder die Passagiere, besonders erhöht werden kann.

Die Erfindung zeichnet sich dadurch aus, dass mittels einer weiteren Erfassungseinrichtung ein Umgebungsleuchtwert in einer Umgebung des Fahrzeugs mittels einer weiteren Erfassungseinrichtung erfasst wird. Die weitere Erfassungseinrichtung kann an dem Fahrzeug angeordnet sein und/oder auf eine Umgebung des Fahrzeugs gerichtet sein. Die Erfassungseinrichtung kann zum Erfassen des Umgebungsleuchtwertes einen oder mehrere Sensoren aufweisen. Weist die weitere Erfassungseinrichtung beispielsweise mehrere Sensoren auf, so können diese bevorzugt verteilt, insbesondere in vorbestimmten Abständen zueinander, an der Karosserie des Fahrzeugs angeordnet sein. Der Sensor kann beispielsweise als eine Kamera oder als ein Lichtsensor oder als ein Regensensor oder als ein Farbsensor ausgebildet sein. Der Umgebungsleuchtwert umfasst dabei eine Lichtfarbe, welche in der Umgebung des Fahrzeugs erfasst wird. Ferner wird der aktuelle Beleuchtungswert derart angepasst, dass eine Lichtfarbe des ausgegebenen Lichts in dem Innenraum des Fahrzeugs an eine in der Umgebung des Fahrzeugs erfasste Lichtfarbe angepasst wird. Mit anderen Worten kann die Steuereinrichtung dazu eingerichtet sein, in Abhängigkeit von der in der Umgebung erfassten Lichtfarbe oder den in der Umgebung erfassten Lichtfarben die zumindest eine Lichtquelle derart anzusteuern, dass die Lichtquelle Licht in einer Lichtfarbe des Umgebungslichts ausgibt. Mit anderen Worten kann das ausgleichende Licht der Lichtquelle die gleiche Lichtfarbe wie das Umgebungslicht haben.

Im Laufe des Tages kann das Umgebungslicht ein oder mehrere Lichtfarben aufweisen, welche insbesondere durch die weitere Erfassungseinrichtung erfassbar sind. Die Lichtfarbe oder die Lichtfarben können der Steuereinrichtung hinterlegt werden. Der Beleuchtungssollwert kann eine oder mehrere vorbestimmte Lichtfarben aufweisen. Dabei kann die Lichtfarbe des aktuellen Beleuchtungswertes an eine vorgegebene Lichtfarbe des Umgebungslichts des Beleuchtungssollwertes oder eine aktuelle Lichtfarbe des Umgebungslichts angepasst werden. Wird der aktuelle Beleuchtungswert an eine aktuelle Lichtfarbe angepasst, so kann durch die Steuereinrichtung die erfasste Lichtfarbe des Umgebungslichts mit den ihr hinterlegten Lichtfarben verglichen werden und daraus die Lichtfarbe ausgewählt werden. Die einzustellende Lichtfarbe kann beispielsweise aus einer aktuellen Uhrzeit und/oder durch Sensorik oder die Sensoren der weiteren Erfassungseinrichtung erfasst werden oder kann auch durch den Nutzer oder Fahrer vorgegeben werden.

Durch das Anpassen der Lichtfarbe ergibt sich der Vorteil, dass besonders realitätsnah oder umgebungstreu das Licht in dem Innenraum eingestellt werden kann. Durch das Verfahren wird ferner auf besonders einfache und zuverlässige Art und Weise der aktuelle Beleuchtungswert eingestellt. Ferner können durch das Verfahren Lichtschwankungen besonders gut ausgeglichen und damit ein Komfort für einen Fahrer oder Passagiere des Fahrzeugs bei der Nutzung des Fahrzeugs erhöht werden.

Eine vorteilhafte Ausführungsform sieht vor, dass der Beleuchtungswert ferner einen Helligkeitswert umfasst, wobei der erfasste aktuelle Helligkeitswert auf einen vorgegebenen Helligkeitswert des Beleuchtungssollwertes eingestellt wird, wenn eine Abweichung des aktuellen Helligkeitswertes von dem vorgegebenen Helligkeitswert erfasst wird. Mit anderen Worten kann eine Helligkeit oder Lichtintensität oder Beleuchtungsstärke in dem Innenraum des Fahrzeugs angepasst werden. Insbesondere kann eine abgegebene Lichtmenge der zumindest einen Lichtquelle in dem Innenraum abhängig von der vorgegebenen Lichtmenge oder Helligkeit in dem Innenraum geregelt werden. Dabei kann die Lichtmenge derart geregelt werden, dass die Helligkeit im Innenraum bei sich ändernden Lichtwechseln oder Lichtverhältnissen konstant bleibt. Die Helligkeit kann dabei durch die Erfassungseinrichtung erfasst werden.

Im Folgenden soll noch auf ein konkretes Ausführungsbeispiel genauer eingegangen werden. Im Innenraum des Fahrzeugs ist zumindest ein Lichtsensor der Erfassungseinrichtung so positioniert oder angeordnet, dass dieser die vom Fahrer wahrgenommene Helligkeit des Innenraums erfassen kann. Besonders bevorzugt ist ein solcher Sensor oder die Erfassungseinrichtung in der Nähe oder in einem Bereich des Kopfes des Fahrers positioniert und/oder hat eine Ausrichtung und/oder einen Erfassungsbereich, der dem Sichtfeld des Fahrers entspricht. Beispielsweise kann der Sensor an einem Dachhimmel des Fahrzeugs angeordnet sein. Der Sensor kann dabei derart in dem Fahrzeug angeordnet sein, dass Fensterflächen, beispielsweise die der Instrumententafel, nicht beinhaltet sind. Über eine Regelung der Einstellung der zumindest einen Lichtquelle, insbesondere durch die Steuereinrichtung, kann eine konstante Helligkeit und/oder eine konstante Lichtfarbe ausgelegt werden. Dabei kann die zumindest eine Lichtquelle angesteuert werden, damit diesen den Erfassungsbereich des Sensors und damit auch den Sichtbereich des Fahrers aufhellen und/oder farblich anpassen kann. Besonders bevorzugt ist die Lichtquelle genau wie der Sensor in der Nähe oder in einem Bereich des Fahrers positioniert. Hierdurch kann ein sichtbarer Schattenwurf minimiert oder reduziert werden.

In vorteilhafter Weise wird, wenn der erfasste Helligkeitswert in dem Innenraum einen Helligkeitsschwellwert überschreitet, durch die Steuereinrichtung eine Verdunklungseinrichtung des Fahrzeugs zum Abdunkeln des Innenraums angesteuert. Mit "Helligkeitsschwellwert" ist insbesondere ein Grenzwert oder ein Maximalwert gemeint. Beispielsweise kann der Helligkeitsschwellwert an eine maximale Helligkeit des Umgebungslichts oder Sonnenlichts angepasst sein. Liegt also der vorgegebene Helligkeitswert in dem Innenraum unterhalb des Helligkeitsschwellwerts, so wird durch die Steuereinrichtung eine Verdunklungseinrichtung des Fahrzeug zum Abdunkeln oder Verdunkeln des Innenraums des Fahrzeugs angesteuert. Mit anderen Worten kann durch den vorgegebenen Helligkeitswert der Helligkeitsschwellwert durch Ansteuern der zumindest einen Lichtquelle nicht erreicht werden, so steuert die Steuereinrichtung die Verdunklungseinrichtung an. Bevorzugt umfasst die Verdunklungseinrichtung zumindest eine Jalousie oder ein Rollo des Fahrzeugs, welche oder welches an einer Scheibe des Fahrzeugs angeordnet ist, und/oder ein Electrowetting Display, welches insbesondere an zumindest einer Schreibe des Fahrzeugs, bevorzugt an der Windschutzscheibe und/oder an der Heckscheibe und/oder an einer oder mehreren Seitenscheiben des Fahrzeugs, angeordnet ist und/oder die zumindest eine Scheibe zumindest teilweise, also vollständig oder teilweise, bedeckt, und/oder zumindest eine elektrochrome Scheibe, welche bevorzugt als Windschutzscheibe und/oder als Heckscheibe und/oder als eine oder mehrere Seitenscheiben des Fahrzeugs ausgebildet ist. Zum Abdunkeln des Innenraums kann die Steuereinrichtung die Jalousie derart ansteuern, dass die Jalousie die Scheibe zumindest teilweise, also vollständig oder teilweise bedeckt oder überdeckt. Zusätzlich oder alternativ kann die Steuereinrichtung dazu eingerichtet sein, zum Abdunkeln der Scheibe, die elektrochrome Scheibe derart anzusteuern, dass ein Transparenzgrad der Scheibe durch die Steuereinrichtung eingestellt wird. Mit anderen Worten kann durch das Ansteuern der elektrochromen Scheibe die Scheibe lichtdurchlässig, teilweise lichtdurchlässig und lichtundurchlässig eingestellt oder geschaltet werden. Durch das Ansteuern der Verdunklungseinrichtung des Fahrzeugs ergibt sich der Vorteil, dass die Lichtverhältnisse in der Umgebung des Fahrzeugs auf besonders einfache und zuverlässige Art und Weise eingegangen werden kann. Ferner kann dadurch auch bei helleren Außenlichtverhältnissen der Beleuchtungssollwert in dem Innenraum des Fahrzeugs besonders einfach erfüllt werden.

Der Erfindung liegt ferner die Erkenntnis zugrunde, dass gerade bei Nachtfahrten es immer wieder vorkommen kann, dass ein Fahrer durch die Scheinwerfer eines anderen Fahrzeugs kurzzeitig, insbesondere stark, geblendet wird. Mögliche Ursachen hierfür können topologische Gegebenheiten und/oder Unachtsamkeit, wie zum Beispiel ein versehentliches Fahren mit Fernlicht, und/oder oder die Straßenverhältnisse, wie zum Beispiel reflektierende Wasserflächen, sein. In so einem Fall reagiert das menschliche Auge durch eine Adaptation an eine helle Umgebung. Ist der helle Lichtreiz vorbei, erfolgt umgekehrt die Adaptation an eine dunkle Umgebung. Beide Vorgänge benötigen Zeit, wobei die Adaptation an die helle Umgebung insbesondere deutlich schneller vollzogen wird, als die Adaptation an dunkle Umgebung, was zu einen Zeitraum von einigen Sekunden bis hin zu einer Minute nach einer Blendung führt, insbesondere abhängig von der Stärke der Blendung, in dem der Fahrer deutlich schlechter sieht, als gewöhnlich.

Hierzu ist erfindungsgemäß vorgesehen, dass das Fahrzeug ferner eine Scheinwerfereinrichtung umfasst, wobei durch die Steuereinrichtung das durch die Scheinwerfereinrichtung ausgegebene Scheinwerferlicht in Abhängigkeit von dem aktuellen Beleuchtungswert eingestellt wird. Zusätzlich oder alternativ kann das Scheinwerferlicht in Abhängigkeit von dem Umgebungsleuchtwert und/oder dem vorgegebenen Beleuchtungssollwert und/oder einem Fahrbetrieb des Fahrzeugs eingestellt werden. Insbesondere ist das durch die Scheinwerfereinrichtung, welche zumindest einen Scheinwerfer, besonders bevorzugt zwei Scheinwerfer des Fahrzeugs umfasst, ausgegebene Licht auf die Umgebung, insbesondere auf einen Bereich in Fahrtrichtung des Fahrzeug vor dem Fahrzeug gerichtet. Mit anderen Worten ist das durch die Scheinwerfereinrichtung ausgegebene Licht auf einen Frontbereich vor dem Fahrzeug gerichtet. Das Scheinwerferlicht kann als ein Abblendlicht oder als ein Fernlicht ausgebildet sein. Durch das Anpassen des ausgegebenen Scheinwerferlichts kann auf unterschiedliche fahrzeugexterne oder fahrzeuginterne Einflüsse besonders zuverlässig durch die Steuereinrichtung reagiert werden, wodurch ein Komfort für einen Fahrer und/oder Passagiere des Fahrzeugs erhöht werden kann.

In vorteilhafter Weise wird vor oder bei einem Wechsel von einem autonomen Fahrbetrieb in einen nicht-autonomen Fahrbetrieb des Fahrzeugs eine Helligkeit des durch die Scheinwerfereinrichtung ausgegebenen Scheinwerferlichts durch die Steuereinrichtung höher eingestellt als eine Helligkeit des aktuelle Beleuchtungswerts oder des vorgegeben Beleuchtungssollwertes in dem Innenraum des Fahrzeugs, wenn durch die weitere Erfassungseinrichtung erfasst wird, dass das Umgebungslicht eine höhere Helligkeit aufweist, als der aktuelle Beleuchtungswert oder der vorgegebene Beleuchtungssollwert in dem Innenraum des Fahrzeugs. Mit anderen Worten die Steuereinrichtung dazu eingerichtet sein, die Vorfeldbeleuchtung des Fahrzeugs, nachdem der Fahrer die Fahraufgabe übernommen hat, zu verstärken. Besonders bevorzugt kann das durch die Scheinwerfereinrichtung ausgegebene Licht an den Umgebungsleuchtwert durch die Steuereinrichtung angepasst werden, wenn der aktuelle Beleuchtungswert oder der vorgegebene Beleuchtungssollwert in dem Innenraum niedriger oder kleiner ist, als der Umgebungsleuchtwert. Beispielsweise kann die Steuereinrichtung die Vorfeldbeleuchtung bei einer Blendung des Fahrers, insbesondere bei einer Blendung durch den Gegenverkehr, verstärken. Besonders bevorzugt umfasst die Scheinwerfereinrichtung einen Frontscheinwerfer, der für eine vorbestimmte Zeitdauer mehr Licht mit einem vorbestimmten Wert bereitstellen kann, der größer ist, als ein Scheinwerferbeleuchtungsschwellwert. Mit anderen Worten kann der Frontscheinwerfer dazu eingerichtet sein, mehr oder stärkeres Licht bereitzustellen, als es die normale, der Fahrsituation angepasste Lichtverteilung erfordert. Das zusätzliche Licht wird dabei insbesondere mit der gleichen Lichtverteilung emittiert, wie die normale, der Fahrsituation angepasste Lichtverteilung. Eine solche Lichtverteilung kann zum Beispiel ein Abblendlicht, ein Landstraßenlicht oder Fernlicht oder ein maskiertes Dauerfernlicht sein.

Ein Ende des autonomen Fahrbetriebs oder ein Wechsel des autonomen Fahrbetriebs in einen nicht-autonomen Fahrbetrieb kann beispielsweise durch die Erfassungseinrichtung erfasst werden, wenn ein Fahrer des Fahrzeugs in das aktuelle Fahrmanöver eingreift. Alternativ kann das Ende des autonomen Fahrbetriebs oder ein Wechsel des autonomen Fahrbetriebs in einen nicht-autonomen Fahrbetrieb dadurch erfasst werden, dass das Fahrzeug nur auf einer vorbestimmten Strecke, welche einem Navigationssystem des Fahrzeugs hinterlegt sein kann, sich im autonomen Fahrbetrieb befindet. Ist das Ende der vorbestimmten Fahrstrecke erreicht, erfolgt ein Wechsel in den nicht-autonomen Fahrbetrieb. Der autonome Fahrbetrieb ist also am Ende der vorbestimmten Fahrstrecke beendet.

Das ausgegebene Scheinwerferlicht kann bevorzugt für eine vorbestimmte Zeitspanne angepasst werden. Damit kann der Fahrer in einem vorbestimmten Zeitraum - der vorbestimmten Zeitspanne - durch ein helleres Frontlicht der Scheinwerfereinrichtung unterstützt werden. Die vorbestimmte Zeitspanne oder Zeitdauer kann zwischen 1s und 60s oder mehr als 60s betragen. Nach Ablauf der vorbestimmten Zeitdauer kann die Steuereinrichtung dazu eingerichtet sein, die Scheinwerfereinrichtung derart anzusteuern, dass das durch die Scheinwerfereinrichtung ausgegebene Scheinwerferlicht auf die ursprüngliche Helligkeit oder Lichtstärke oder Lichtmenge oder Lichtintensität zurückgestellt, insbesondere heruntergeregelt, wird. Mit anderen Worten kann die Steuereinrichtung nach Ablauf der vorbestimmten Zeitspanne dazu eingerichtet sein, die Scheinwerfereinrichtung auf die Ursprungseinstellung, insbesondere eines Scheinwerferbeleuchtungswertes eines Abblendlichts oder Fernlichts der Scheinwerfereinrichtung, zurückzusetzen.

Gemäß einer vorteilhaften Weiterbildung ist es vorgesehen, dass eine Leistung der Scheinwerfereinrichtung und/oder eine Helligkeit des durch die Scheinwerfereinrichtung ausgegebenen Scheinwerferlichts in einem autonomen Fahrbetrieb des Fahrzeugs auf einen vorbestimmten Scheinwerferbeleuchtungssollwert, welche insbesondere niedriger ist als eine Helligkeit eines Scheinwerferbeleuchtungswertes eines Abblendlichts oder Fernlichts, gegenüber einem nicht-autonomen Fahrbetrieb reduziert wird. Mit anderen Worten kann die Steuereinrichtung dazu eingerichtet sein, die Leistung und/oder die Helligkeit des Scheinwerferlichts in einem autonomen Fahrbetrieb oder Fahrmodus des Fahrzeugs unter eine Ursprungseinstellung eines Scheinwerferbeleuchtungswertes eines Abblendlichts oder Fernlichts der Scheinwerfereinrichtung herunterzuregeln. Mit anderen Worten kann das Außenlicht oder die Vorfeldbeleuchtung bei autonomen Fahrten des Fahrzeugs reduziert werden. Dabei kann die Reduzierung des Außenlichts oder der Vorfeldbeleuchtung nur insoweit reduziert werden, dass eine Gewährleistung der Sichtbarkeit, der Sicherheit und der Kamerafunktion oder der Kamerafunktionen des Fahrzeugs gegeben ist. Hierdurch kann insbesondere im autonomen Fahrbetrieb des Fahrzeugs Energie eingespart werden.

Eine weitere vorteilhafte Ausführungsform sieht vor, dass bei einem Wechsel von einem autonomen Fahrbetrieb in einen nicht-autonomen Fahrbetrieb das durch die Scheinwerfereinrichtung ausgegebene Licht an den vorgegebenen Beleuchtungssollwert in dem Innenraum des Fahrzeugs durch die Steuereinrichtung angepasst wird. Dadurch ergibt sich der Vorteil, dass dem Fahrer oder einem Passagier des Fahrzeugs geholfen werden kann, gerade bei Nacht oder dunkleren Lichtverhältnissen in der Umgebung des Fahrzeugs als in dem Innenraum, sich an die Lichtverhältnisse in der Umgebung schneller zu gewöhnen. Besonders bevorzugt kann die Steuereinrichtung die Scheinwerfereinrichtung derart ansteuern, dass das durch die Scheinwerfereinrichtung ausgegebene Licht für eine vorbestimmte Zeitspanne an den vorgegebenen Beleuchtungssollwert in dem Innenraum des Fahrzeugs angepasst wird. Die vorbestimmte Zeitdauer kann zwischen 1s und 60s oder mehr als 60s betragen. Nach Ablauf der vorbestimmten Zeitdauer kann die Steuereinrichtung dazu eingerichtet sein, die Scheinwerfereinrichtung derart anzusteuern, dass das durch die Scheinwerfereinrichtung ausgegebene Licht auf die ursprüngliche Lichtstärke oder Lichtmenge oder Lichtintensität zurückgestellt, insbesondere angehoben oder reduziert, wird. Mit anderen Worten kann die Steuereinrichtung nach Ablauf der vorbestimmten Zeitspanne dazu eingerichtet sein, die Scheinwerfereinrichtung auf die Ursprungseinstellung, insbesondere eines Scheinwerferbeleuchtungswertes eines Abblendlichts oder Fernlichts der Scheinwerfereinrichtung, zurückzusetzen.

Eine vorteilhafte Weiterbildung sieht vor, dass vor einem Wechsel von einem autonomen Fahrbetrieb in einen nicht-autonomen Fahrbetrieb des Fahrzeugs der Beleuchtungssollwert auf einen weiteren Beleuchtungssollwert, welcher niedriger als der Beleuchtungssollwert ist, reduziert wird. Mit anderen Worten kann es zusätzlich oder alternativ vorgesehen sein, dass vor einem Wechsel von einem autonomen Fahrbetrieb in einen nicht-autonomen Fahrbetrieb eine Helligkeit des aktuellen Beleuchtungswertes oder des eingestellten Beleuchtungssollwertes durch die Steuereinrichtung herabgesetzt wird. Beispielsweise kann die Steuereinrichtung dazu eingerichtet sein, die Innenraumhelligkeit vor der Übernahme der Fahraufgabe nach einer autonom gefahrenen Strecken abzusenken. Dadurch ergibt sich der Vorteil, dass dem Fahrer oder einem Passagier des Fahrzeugs geholfen werden kann, gerade bei Nacht oder dunkleren Lichtverhältnissen in der Umgebung des Fahrzeugs als in dem Innenraum, sich an die Lichtverhältnisse in der Umgebung schneller zu gewöhnen.

In vorteilhafter Weise kann die Steuereinrichtung dazu eingerichtet sein, weitere Lichtquellen, insbesondere im Bereich der Fahrzeugtüren, an den vorgegebenen Beleuchtungssollwert anzupassen. Beispielsweise kann die Steuereinrichtung die weitere Lichtquelle oder die weiteren Lichtquellen bei einem Öffnen der Fahrzeugtür ansteuern. Die Regelung optimiert die Helligkeiten von Sichtbereichen nicht nur hinsichtlich einer konstanten Farbe und/oder Helligkeit innerhalb des Sichtbereiches, sondern auch hinsichtlich der Sicherheit beim Übergang zwischen verschiedenen Sichtbereichen, speziell innen und/oder außen, zum Beispiel beim Einsteigen oder Aussteigen.

In vorteilhafter Weise umfasst die Scheinwerfereinrichtung zumindest einen LED-Scheinwerfer, welcher insbesondere mit einer Stromregelung ausgestattet ist. Zusätzlich kann die LED-Technologie einen Betrieb des LED-Scheinwerfer oberhalb des Normwertes einstellen. Das Maximum und/oder die Dauer einer Überbelastung des LED-Scheinwerfers hängt dabei im Wesentlichen von Bauform und Temperaturmanagement ab. Es kann also ein geblendeter Fahrer unmittelbar nach der Blendung kurzzeitig durch mehr Licht im Frontbereich, also das Scheinwerferlicht, unterstützt werden. Das Scheinwerferlicht kann mittels einer, insbesondere kurzzeitigen, Übersteuerung dem zumindest einen LED-Scheinwerfer erfolgen. Hierzu bedarf es insbesondere keinen Verbau zusätzlicher Komponenten oder Lichtquellen. Zusätzlich oder alternativ kann es vorgesehen sein, dass das Fahrzeug oder die Scheinwerfereinrichtung zumindest eine weitere Lichtquelle aufweist, welche insbesondere im Bereich der Scheinwerfer angeordnet ist, wobei die zumindest eine weitere Lichtquelle eine höhere Lichtleistung aufweist, als die Scheinwerfer der Scheinwerfereinrichtung. Mit anderen Worten kann eine zusätzliche Lichtleistung in den Scheinwerfern verbaut werden. Die zumindest eine weitere Lichtquelle kann durch die Steuereinrichtung, insbesondere zum Anpassen des Scheinwerferlichts, angesteuert werden.

Zum Beispiel kann die Scheinwerfereinrichtung ein LED-System umfassen, welches auf höhere Lichtleistungen ausgelegt ist, als im Normalbetrieb. Dabei kann das LED-System gedimmt, also mit anteiliger Leistung betrieben werden. Zusätzlich oder alternativ kann es vorgesehen sein, das LED-System, welches insbesondere auf 100% Lichtleistung ausgelegt sein kann, dessen Ansteuerung aber ein Übersteuern des Systems für eine vorbestimmte Zeitspanne, insbesondere ein kurzzeitiges Übersteuern, zulässt. Zusätzlich oder alternativ kann die Scheinwerfereinrichtung mehrere Lichtquellen aufweisen, die die gleiche Lichtverteilung erzeugen, von denen situations- und/oder funktionsabhängig eine variable Anzahl von Lichtquellen geschaltet und/oder gedimmt wird.

Zusätzlich oder alternativ kann die Scheinwerfereinrichtung dazu eingerichtet sein, ein maskiertes Dauerfernlicht bereitzustellen. Hierdurch kann die Scheinwerfereinrichtung dazu eingerichtet sein, die Lichtverteilung gemäß der Verkehrssituation anzupassen. Auch damit kann dem Fahrer nach einer Blendung durch ein entgegenkommendes Fahrzeug, also insbesondere wenn die Helligkeit des Umgebungslichts höher ist als im Innenraum des Fahrzeugs, mehr Licht zur Verfügung gestellt werden.

Zusätzlich oder alternativ kann die Scheinwerfereinrichtung ein adaptives Lichtsystem aufweisen, welches dazu eingerichtet ist, insbesondere in bestimmten Fahrsituationen, die Lichtmenge zu reduzieren oder anzupassen. Beispielsweise ist das adaptive Lichtsystem dazu eingerichtet, eine Eigenblendung durch Reflexion zu vermeiden oder Elektrofahrzeuge effizienter zu realisieren. Erfolgt beispielsweise eine Blendung durch Fremdfahrzeuge in einer Situation mit gedimmten Frontlicht, so besteht auch hier die Möglichkeit zur blendungsbedingten Helligkeitsanhebung.

Durch die entsprechende Ausgestaltung der Scheinwerfereinrichtung ergibt sich der Vorteil, dass unmittelbar nach einer Blendung die Helligkeit der optimalen Lichtverteilung insgesamt angehoben werden kann, um so die verzögerte Dunkel-Adaptation auszugleichen.

Auf Grundlage von Messungen eines oder mehrere Sensoren, wie zum Beispiel einen Regen-Licht-Sensor und/oder ein Kamerasystem und/oder einen Beleuchtungsstärkesensor im Innenraum des Fahrzeugs kann die Beleuchtungsstärke am Auge des Fahrers errechnet oder bestimmt werden. Überschreitet dieser Wert einen bestimmten Schwellwert und/oder fällt er nach längerem erhöhtem Niveau schlagartig ab, so kann davon ausgegangen werden, dass durch die Adaptation des Auges an die helle Umgebung oder durch die Zeit zur Adaptation an dunklere Umgebungen die Wahrnehmung des Fahrers für einen gewissen Zeitraum beeinträchtigt ist. In diesem Zeitraum kann durch das System mehr Licht zur Verfügung gestellt werden. Die Bereitstellung der zusätzlichen Lichtmenge erfolgt entweder unmittelbar nach der Blendung oder ansteigend mit einem Grad der Blendung. Danach kann die Lichtmenge gemäß der durchschnittlichen Adaptationskurve des menschlichen Auges abgesenkt werden. Nach der Blendung sinkt also bevorzugt die Lichtleistung gemäß der Adaptationskurve des menschlichen Auges. Die Adaptionskurve kann der Steuereinrichtung hinterlegt sein.

Zu der Erfindung gehört auch ein weiteres Verfahren zum Einstellen von Lichtverhältnissen eines Fahrzeugs. Dabei wird zunächst einer Steuereinrichtung ein Scheinwerferbeleuchtungssollwert einer Scheinwerfereinrichtung vorgegeben. Durch den Scheinwerferbeleuchtungssollwert wird insbesondere vorgegeben, welche Lichtmenge oder Lichtstärke und/oder Helligkeit das durch die Scheinwerfereinrichtung ausgegeben Licht aufweisen soll. Ferner wird durch die Scheinwerfereinrichtung Licht in Abhängigkeit von dem durch die Steuereinrichtung vorgegebenen Scheinwerferbeleuchtungssollwert ausgegeben. Anschließend wird in einer Umgebung des Fahrzeugs ein aktueller Umgebungsleuchtwert mittels einer Erfassungseinrichtung erfasst. Des Weiteren wird mittels einer weiteren Erfassungseinrichtung ein Beleuchtungswert in einem Innenraum des Fahrzeugs erfasst. Schließlich wird der Scheinwerferbeleuchtungssollwert, insbesondere für eine vorbestimmte Zeitspanne, auf einen vorbestimmten Wert, insbesondere einen Maximalwert, angehoben, wenn durch eine Erfassungseinrichtung erfasst wird, dass der Beleuchtungswert niedriger ist, als der Umgebungsleuchtwert. Insbesondere liegt der vorbestimmte Wert oberhalb des Scheinwerferbeleuchtungssollwertes und/oder des Beleuchtungswertes.

Zu der Erfindung gehört schließlich auch ein System zum Einstellen von Lichtverhältnissen eines Fahrzeugs mit den Merkmalen des Anspruchs 10. Das System umfasst eine Steuereinrichtung, der ein Beleuchtungssollwert in einem Innenraum des Fahrzeugs vorgegeben ist. Ferner umfasst das System zumindest eine Lichtquelle, welche dazu eingerichtet ist, Licht in Abhängigkeit von dem durch die Steuereinrichtung vorgegebenen Beleuchtungssollwert auszugeben. Des Weiteren weist das System eine Erfassungseinrichtung auf, welche dazu eingerichtet ist, einen aktuellen Beleuchtungswert in dem Innenraum zu erfassen. Die Steuereinrichtung ist dabei dazu eingerichtet, den aktuellen Beleuchtungswert auf den vorgegebenen Beleuchtungssollwert anzupassen, wenn eine Abweichung des aktuellen Beleuchtungswertes von dem vorgegebenen Beleuchtungssollwert erfasst wird. Insbesondere wird der aktuelle Beleuchtungswert durch Ansteuern der zumindest einen Lichtquelle angepasst. Das System zeichnet sich dadurch aus, dass das System eine weitere Erfassungseinrichtung aufweist, welche dazu eingerichtet ist, einen Umgebungsleuchtwert in einer Umgebung des Fahrzeugs zu erfassen, wobei der Umgebungsleuchtwert eine Lichtfarbe umfasst. Ferner ist die Steuereinrichtung dazu eingerichtet, den aktuellen Beleuchtungswert derart einzustellen, dass eine Lichtfarbe des ausgegebenen Lichts in dem Innenraum des Fahrzeugs an die in der Umgebung des Fahrzeugs erfasste Lichtfarbe angepasst wird. Ferner umfasst das Fahrzeug eine Scheinwerfereinrichtung, wobei die Steuereinrichtung ferner dazu eingerichtet ist, das durch die Scheinwerfereinrichtung ausgegebene Scheinwerferlicht in Abhängigkeit von dem aktuellen Beleuchtungswert einzustellen.

In vorteilhafter Weise weist die Lichtquelle zumindest zwei Leuchtmittel auf, welche jeweils eine voneinander verschiedene Grundfarbe aufweisen. Mit anderen Worten können zumindest zwei Leuchtmittel verbaut sein, welche eine unterschiedliche Grundfarbe aufweisen. Die Leuchtmittel können beispielsweise als LED oder als eine Lichtquelle mit Farbfilter oder als eine Leuchtstoffröhre oder als eine OLED ausgebildet sein. Beispielsweise kann ein erstes Leuchtmittel der zumindest zwei Leuchtmittel Licht mit einer Lichtfarbe bis 2700 K, welche insbesondere als gelbes Licht wahrgenommen wird, ausgeben oder emittieren. Ein zweites Leuchtmittel der zumindest zwei Leuchtmittel kann Licht mit einer Lichtfarbe zwischen 2700 K und 6500 K ausgeben oder emittieren, welches insbesondere als weißes oder blaues Licht wahrgenommen wird.

Zu der Erfindung gehört auch ein Fahrzeug mit einem System zum Einstellen von Lichtverhältnissen mit den Merkmalen des Anspruchs 12. In vorteilhafter Weise ist das Fahrzeug als Kraftfahrzeug, insbesondere als Personenkraftwagen, oder als Zug oder als U-Bahn oder als Seilgondel oder als Flugzeug oder als Schiff ausgebildet.

Zu der Erfindung gehören auch Weiterbildungen des erfindungsgemäßen Systems, des erfindungsgemäßen Fahrzeugs und des weiteren Verfahrens, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Systems und des erfindungsgemäßen Fahrzeugs hier nicht noch einmal besch rieben.

Im Folgenden ist ein Ausführungsbeispiel der Erfindung beschrieben. Hierzu zeigt:
- Fig. 1: schematisch die Verfahrensschritte eines Verfahrens zum Einstellen von Lichtverhältnissen eines Fahrzeugs; und
- Fig. 2: eine schematische Darstellung des Fahrzeugs mit einem System zum Einstellen von Lichtverhältnissen des Fahrzeugs.

Bei dem im Folgenden erläuterten Ausführungsbeispielen handelt es sich um eine bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar. Des Weiteren sind die beschriebene Ausführungsformen auch durch weitere der bereits beschriebenen Merkmale der Erfindung ergänzbar.

In den Figuren sind funktionsgleiche Elemente jeweils mit denselben Bezugszeichen versehen.

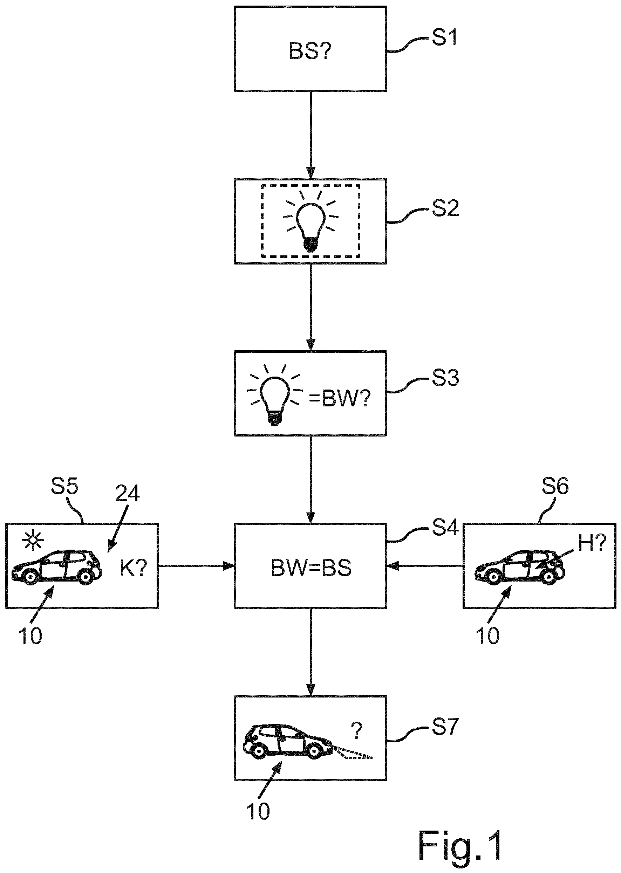

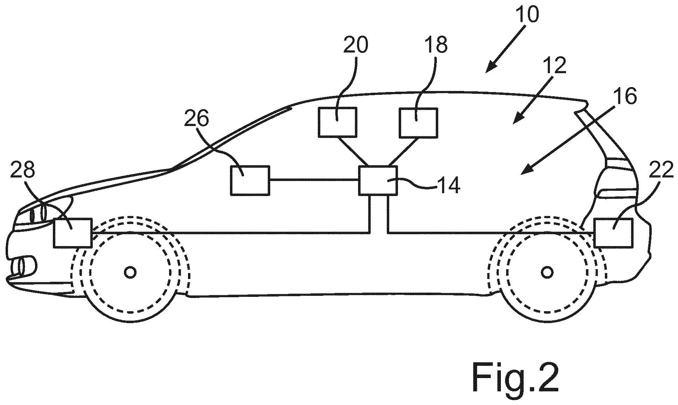

Fig. 1 zeigt in einem schematischen Ablaufdiagramm die einzelnen Verfahrensschritte des Verfahrens zum Einstellen von Lichtverhältnissen eines Fahrzeugs 10. Fig. 2 zeigt schematisch das Fahrzeug 10 mit einem System 12 zum Einstellen von Lichtverhältnissen des Fahrzeugs 10.

Im Zusammenhang mit Fig. 1 und Fig. 2 soll genauer auf das Verfahren sowie auf das System 12 zum Einstellen von Lichtverhältnissen des Fahrzeugs 10 genauer eingegangen werden. In diesem Fall ist das Fahrzeug 10 als ein Kraftwagen, insbesondere als Personenkraftwagen, ausgebildet.

Bei dem Verfahren wird zunächst in einem ersten Verfahrensschritt S1 ein Beleuchtungssollwert BS vorgegeben. Dieser Beleuchtungssollwert BS wird hierzu einer Steuereinrichtung 14 des Fahrzeugs 10 vorgegeben oder dieser hinterlegt. Beispielsweise kann die Steuereinrichtung 14 einen Speicher (in Figuren nicht gezeigt) aufweisen, in dem der Beleuchtungssollwert BS abgelegt oder gespeichert werden kann. Der Beleuchtungssollwert BS gibt insbesondere vor, welche Lichtverhältnisse in dem Fahrzeug 10 herrschen sollen. Mit anderen Worten wird der Beleuchtungssollwert BS für einen Innenraum 16 des Fahrzeugs 10 vorgegeben.

In einem zweiten Verfahrensschritt S2 wird Licht, insbesondere im sichtbaren Wellenlängenbereich, durch zumindest eine Lichtquelle 18 in Abhängigkeit von dem durch die Steuereinrichtung 14 vorgegebenen Beleuchtungssollwert BS ausgegeben. Mit anderen Worten wird durch die zumindest Lichtquelle Licht oder eine Strahlung derart ausgegeben, dass der Beleuchtungssollwert BS in dem Innenraum 16 des Fahrzeugs 10 erfüllt oder gewährleistet ist. Die Lichtquelle 18 kann ein oder mehrere Leuchtmittel aufweisen. Das oder die Leuchtmittel können als LED oder als eine Lichtquelle mit Farbfilter oder als eine Leuchtstoffröhre oder als eine OLED ausgebildet sein. Die zumindest eine Lichtquelle 18 ist im Innenraum 16 des Fahrzeugs 10 bevorzugt an einem Dachhimmel, insbesondere in einem Bereich eines Sitzes, wie beispielsweise dem Fahrersitz oder Beifahrersitz oder Rücksitz, angeordnet.

In einem weiteren dritten Verfahrensschritt S3 wird ein aktueller Beleuchtungswert BW in dem Innenraum 16 mittels einer Erfassungseinrichtung 20 des Systems 12 erfasst. Hierzu kann die Erfassungseinrichtung 20 beispielsweise einen oder mehrere Sensoren aufweisen. Der Sensor kann beispielsweise als eine Kamera oder als ein Lichtsensor ausgebildet sein. Besonders bevorzugt ist die Erfassungseinrichtung 20 im Innenraum 16 des Fahrzeugs 10 an einem Dachhimmel, insbesondere in einem Bereich eines Sitzes, wie beispielsweise dem Fahrersitz oder Beifahrersitz oder Rücksitz, angeordnet.

Anschließend wird in einem Verfahrensschritt S4 der aktuelle Beleuchtungswert BW auf den vorgegebenen Beleuchtungssollwert BS durch die Steuereinrichtung 14 eingestellt, wenn durch die Erfassungseinrichtung 20 oder die Steuereinrichtung 14 eine Abweichung des aktuellen Beleuchtungswertes BW von dem vorgegebenen Beleuchtungssollwert BS erfasst wird. Zum Einstellen des Beleuchtungssollwertes BS steuert die Steuereinrichtung 14 die zumindest eine Lichtquelle 18 an.

Beim Einstellen des Beleuchtungssollwertes BS kann die Steuereinrichtung 14 dazu eingerichtet sein, die zumindest eine Lichtquelle 18 derart anzusteuern, dass eine Helligkeit H oder eine Intensität des durch die zumindest eine Lichtquelle 18 ausgegebenen Lichts in einem Verfahrensschritt S6 oder eine Lichtfarbe K des durch die zumindest eine Lichtquelle 18 ausgegebenen Lichts in einem Verfahrensschritt S5 angepasst oder eingestellt wird.

Zum Anpassen oder Einstellen der Lichtfarbe wird durch eine weitere Erfassungseinrichtung 22 ein Umgebungsleuchtwert in einer Umgebung 24 des Fahrzeugs 10 erfasst. Als der Umgebungsleuchtwert wird dabei eine Lichtfarbe K des Umgebungslichts erfasst. In dem Verfahrensschritt S5 wird dann der aktuelle Beleuchtungswert BW derart eingestellt, dass eine Lichtfarbe K des ausgegebenen Lichts durch die zumindest eine Lichtquelle 18 in dem Innenraum 16 des Fahrzeugs 10 an eine in der Umgebung 24 des Fahrzeugs erfasste Lichtfarbe K angepasst wird. Hierzu weist die zumindest eine Lichtquelle 18 zumindest zwei Leuchtmittel auf, welche jeweils eine voneinander verschiedene Grundfarbe aufweisen. Mit anderen Worten können zumindest zwei Leuchtmittel verbaut sein, welche eine unterschiedliche Grundfarbe aufweisen. Beispielsweise kann ein erstes Leuchtmittel der zumindest zwei Leuchtmittel Licht mit einer Lichtfarbe bis 2700 K, welche insbesondere als gelbes Licht wahrgenommen wird, ausgeben oder emittieren. Ein zweites Leuchtmittel der zumindest zwei Leuchtmittel kann Licht mit einer Lichtfarbe zwischen 2700 K und 6500 K ausgeben oder emittieren, welches insbesondere als weißes oder blaues Licht wahrgenommen wird.

Zum Anpassen der Helligkeit H in dem Innenraum 16 des Fahrzeugs 10 kann der Beleuchtungssollwert ferner einen vorbestimmten Helligkeitswert H umfassen. Durch die Erfassungseinrichtung 20 wird überprüft, ob der erfasste aktuelle Helligkeitswert in dem Innenraum des 16 des Fahrzeugs 10 mit dem vorbestimmten oder vorgegebenen Helligkeitswert des Beleuchtungssollwertes BS übereinstimmt. Wird durch die Erfassungseinrichtung 20 oder die Steuereinrichtung 14 erfasst, dass der aktuelle Helligkeitswert von dem vorgegebenen Helligkeitswert abweicht, so wird der Helligkeitswert auf den vorgegebenen Helligkeitswert eingestellt. Hierzu steuert die Steuereinrichtung 14 die zumindest eine Lichtquelle 18 an, welche insbesondere daraufhin eine Lichtintensität oder Helligkeit oder Lichtmenge des ausgegebenen Lichts erhöht oder absenkt, insbesondere solange bis der vorgegebene Helligkeitswert eingestellt ist.

Wenn der erfasste Helligkeitswert H in dem Innenraum 16 einen Helligkeitsschwellwert überschreitet, was beispielsweise der Fall sein kann, wenn die Umgebungshelligkeit heller oder stärker ist, als es für die zumindest eine Lichtquelle 18 möglich ist das ausgegebene Licht zu emittieren, so kann die Steuereinrichtung 14 eine Verdunklungseinrichtung 26 des Fahrzeugs 10 zum Abdunkeln des Innenraums 16 ansteuern.

Die Verdunklungseinrichtung 26 kann hierzu zumindest eine Jalousie, welche an einer Scheibe des Fahrzeugs 10 angeordnet ist, und/oder eine elektrochrome Scheibe umfassen. Zum Abdunkeln des Innenraums 16 kann die Steuereinrichtung 14 die Jalousie beispielsweise derart ansteuern, dass die Jalousie die Scheibe zumindest teilweise, also vollständig oder teilweise bedeckt oder überdeckt. Zusätzlich oder alternativ kann die Steuereinrichtung 14 dazu eingerichtet sein, zum Abdunkeln der Scheibe, die elektrochrome Scheibe derart anzusteuern, dass ein Transparenzgrad der Scheibe durch die Steuereinrichtung 14 eingestellt wird. Mit anderen Worten kann durch das Ansteuern der elektrochromen Scheibe die Scheibe lichtdurchlässig, teilweise lichtdurchlässig und lichtundurchlässig eingestellt werden.

Damit ein Fahrer oder ein Fahrzeuginsasse nicht nur in dem Innenraum 16 des Fahrzeugs konstanten oder gleichmäßigen Lichtverhältnissen ausgesetzt ist, kann es zusätzlich oder alternativ auch vorgesehen sein, dass das Fahrzeug 10 oder das System 12 ferner eine Scheinwerfereinrichtung 28 umfasst, wobei das durch die Scheinwerfereinrichtung 28 ausgegebene Licht, das Scheinwerferlicht, in einem Verfahrensschritt S7 in Abhängigkeit von dem Umgebungsleuchtwert und/oder dem vorgegebenen Beleuchtungssollwert BS oder dem aktuellen Beleuchtungswert BW und/oder einem Fahrbetrieb des Fahrzeugs 10 eingestellt wird.

Hierbei kann die Steuereinrichtung 14 die Scheinwerfereinrichtung 28 derart ansteuern, dass das Scheinwerferlicht, beispielsweise bei einer Blendung oder unmittelbar nachdem der Fahrer die Fahraufgabe übernommen hat, verstärkt wird. Zusätzlich oder alternativ kann die Steuereinrichtung 14 die Scheinwerfereinrichtung 28 derart ansteuern, dass die Innenraumhelligkeit, insbesondere der Beleuchtungssollwert, schon vor der Übernahme der Fahraufgabe nach autonom gefahrenen Strecken abgesenkt wird. Zusätzlich oder alternativ kann die Steuereinrichtung 14 die Scheinwerfereinrichtung 28 derart ansteuern, dass das Scheinwerferlicht oder ein Außenlichts des Fahrzeugs 10 bei autonomen Fahrten, insbesondere unter Gewährleistung der Sichtbarkeit und der Funktionen der weiteren Erfassungseinrichtung 22, reduziert wird. Zusätzlich oder alternativ kann die Steuereinrichtung 14 die Scheinwerfereinrichtung 28 derart ansteuern, dass eine Lichtverteilung, insbesondere eine Farben und/oder eine Helligkeit, beispielsweise auf einsamen Langstrecken oder im urbanen Bereich unter dem Aspekt Ermüdung und dem Umstand, dass ein möglichst dunkel adaptierter Fahrer auch in den Bereichen mehr sieht, die nicht durch den Lichtkegel der Scheinwerfer erhellt werden kann, verändert wird.

Insgesamt zeigt das Beispiel, wie durch die Erfindung eine Lichtschwankungen ausgleichende Beleuchtung bereitgestellt wird.

### Bezugszeichenliste

- 10: Fahrzeug
- 12: System
- 14: Steuereinrichtung
- 16: Innenraum
- 18: Lichtquelle
- 20: Erfassungseinrichtung
- 22: weitere Erfassungseinrichtung
- 24: Umgebung
- 26: Verdunklungseinrichtung
- 28: Scheinwerfereinrichtung
- S1: erster Verfahrensschritt
- S2: zweiter Verfahrensschritt
- S3: dritter Verfahrensschritt
- S4: vierter Verfahrensschritt
- S5: fünfter Verfahrensschritt
- S6: sechster Verfahrensschritt
- S7: siebter Verfahrensschritt

## Patentansprüche

1. Verfahren zum Einstellen von Lichtverhältnissen eines Fahrzeugs (10) und zum Bereitstellen einer Lichtschwankungen in einem Innenraum (16) des Fahrzeugs (10) ausgleichenden Beleuchtung, umfassend:
- Vorgeben eines Beleuchtungssollwertes (BS) einer Steuereinrichtung (14) in dem Innenraum (16);
- Ausgeben von Licht durch zumindest eine in dem Innenraum (16) angeordnete Lichtquelle (18) in Abhängigkeit von dem durch die Steuereinrichtung (14) vorgegebenen Beleuchtungssollwert (BS);
- Erfassen eines aktuellen Beleuchtungswertes (BW) in dem Innenraum (16) mittels einer Erfassungseinrichtung (20);
- Einstellen des aktuellen Beleuchtungswertes (BW) auf den vorgegebenen Beleuchtungssollwert (BS) durch Ansteuerung der zumindest einen Lichtquelle (18), wenn eine Abweichung des aktuellen Beleuchtungswertes (BS) von dem vorgegebenen Beleuchtungssollwert (BS) erfasst wird;
- Erfassen eines Umgebungsleuchtwertes in einer Umgebung (24) des Fahrzeugs (10) mittels einer weiteren Erfassungseinrichtung (22), wobei der Umgebungsleuchtwert eine Lichtfarbe (K) des Umgebungslichts umfasst,
- Einstellen des aktuellen Beleuchtungswertes (BW) durch Ansteuerung der zumindest einen Lichtquelle (18) derart, dass eine Lichtfarbe (K) des ausgegebenen Lichts in dem Innenraum (16) des Fahrzeugs (10) an eine in der Umgebung (24) des Fahrzeugs (10) erfasste Lichtfarbe (K) angepasst wird,
**dadurch gekennzeichnet, dass**
- das Fahrzeug (10) ferner eine Scheinwerfereinrichtung (28) umfasst, wobei durch die Steuereinrichtung (14) das durch die Scheinwerfereinrichtung (28) ausgegebene Scheinwerferlicht in Abhängigkeit von dem aktuellen Beleuchtungswert (BW) derart eingestellt wird, dass Lichtschwankungen in dem Innenraum des Fahrzeuges ausgeglichen und ein Komfort für einer Fahrer oder Passagiere des Fahrzeugs (10) bei der Nutzung des Fahrzeugs (10) erhöht werden.

2. Verfahren nach Anspruch 1, **dadurch gekennzeichnet, dass** der Beleuchtungswert (BW) ferner einen Helligkeitswert (H) umfasst, wobei der erfasste aktuelle Helligkeitswert (H) auf einen vorgegebenen Helligkeitswert des Beleuchtungssollwertes (BS) eingestellt wird, wenn eine Abweichung des aktuellen Helligkeitswertes (H) von dem vorgegebenen Helligkeitswert erfasst wird.

3. Verfahren nach Anspruch 2, **dadurch gekennzeichnet, dass** wenn der erfasste Helligkeitswert (H) in dem Innenraum (16) einen Helligkeitsschwellwert überschreitet, die Steuereinrichtung (14) eine Verdunklungseinrichtung (26) des Fahrzeugs (10) zum Abdunkeln des Innenraums (16) ansteuert.

4. Verfahren nach Anspruch 3, **dadurch gekennzeichnet, dass** die Verdunklungseinrichtung eine Jalousie des Fahrzeugs (10), welche an einer Scheibe des Fahrzeugs (10) angeordnet ist, und/oder ein Electrowetting Display, welches insbesondere an zumindest einer Schreibe des Fahrzeugs, bevorzugt an der Windschutzscheibe und/oder an der Heckscheibe und/oder an einer oder mehreren Seitenscheiben des Fahrzeugs, angeordnet ist, und/oder eine elektrochrome Scheibe des Fahrzeugs (10), welche bevorzugt als Windschutzscheibe und/oder als Heckscheibe und/oder als eine oder mehrere Seitenscheiben des Fahrzeugs ausgebildet ist, umfasst, wobei beim Ansteuern der elektrochromen Scheibe und/oder des Electrowetting Displays ein Transparenzgrad der Scheibe und/oder eine Lichtdurchlässigkeit der Scheibe durch die Steuereinrichtung (14) eingestellt wird.

5. Verfahren nach einem der vorhergehenden Ansprüche, **dadurch gekennzeichnet, dass** durch die Steuereinrichtung (14) das durch die Scheinwerfereinrichtung (28) ausgegebene Scheinwerferlicht in Abhängigkeit von dem Umgebungsleuchtwert und/oder dem vorgegebenen Beleuchtungssollwert (BS) und/oder einem Fahrbetrieb des Fahrzeugs (10) eingestellt wird.

6. Verfahren nach Anspruch 5, **dadurch gekennzeichnet, dass** vor oder bei einem Wechsel von einem autonomen Fahrbetrieb in einen nicht-autonomen Fahrbetrieb des Fahrzeugs (10) eine Helligkeit des durch die Scheinwerfereinrichtung (28) ausgegebene Scheinwerferlichts durch die Steuereinrichtung (14) höher eingestellt wird, als eine Helligkeit des aktuelle Beleuchtungswerts (BW) oder des vorgegeben Beleuchtungssollwertes (BS) in dem Innenraum (16) des Fahrzeugs (10), wenn durch die weitere Erfassungseinrichtung (22) erfasst wird, dass das Umgebungslicht eine höhere Helligkeit aufweist, als der aktuelle Beleuchtungswert (BW) oder der vorgegebene Beleuchtungssollwert (BS) in dem Innenraum (16) des Fahrzeugs (10).

7. Verfahren nach Anspruch 5, **dadurch gekennzeichnet, dass** eine Leistung der Scheinwerfereinrichtung (28) und/oder eine Helligkeit des durch die Scheinwerfereinrichtung (28) ausgegebenen Scheinwerferlichts in einem autonomen Fahrbetrieb des Fahrzeugs (10) auf einen vorbestimmten Scheinwerferbeleuchtungssollwert, welche insbesondere niedriger ist als eine Helligkeit eines Scheinwerferbeleuchtungswertes eines Abblendlichts oder Fernlichts, gegenüber einem nicht-autonomen Fahrbetrieb reduziert wird.

8. Verfahren nach Anspruch 5, **dadurch gekennzeichnet, dass** bei einem Wechsel von einem autonomen Fahrbetrieb in einen nicht-autonomen Fahrbetrieb das durch die Scheinwerfereinrichtung (28) ausgegebene Licht an den vorgegebenen Beleuchtungssollwert (BS) in dem Innenraum (16) des Fahrzeugs (10) durch die Steuereinrichtung (14) angepasst wird.

9. Verfahren nach einem der vorhergehenden Ansprüche, **dadurch gekennzeichnet, dass** vor einem Wechsel von einem autonomen Fahrbetrieb in einen nicht-autonomen Fahrbetrieb des Fahrzeugs (10) der Beleuchtungssollwert (BS) auf einen weiteren Beleuchtungssollwert, welcher niedriger ist als der Beleuchtungssollwert, reduziert wird.

10. System (12) zum Einstellen von Lichtverhältnissen eines Fahrzeugs (10) und zum Bereitstellen einer Lichtschwankungen in einem Innenraum (16) des Fahrzeugs (10) ausgleichenden Beleuchtung, umfassend:
- eine Steuereinrichtung (14), der ein Beleuchtungssollwert (BS) in dem Innenraum (16) vorgegeben ist;
- Zumindest eine in dem Innenraum (16) angeordnete Lichtquelle (18), welche dazu eingerichtet ist, Licht in Abhängigkeit von dem durch die Steuereinrichtung (14) vorgegebenen Beleuchtungssollwert (BS) auszugeben;
- eine Erfassungseinrichtung (20), welche dazu eingerichtet ist, einen aktuellen Beleuchtungswertes (BW) in dem Innenraum (16) zu erfassen, wobei
- die Steuereinrichtung (14) ferner dazu eingerichtet ist, den aktuellen Beleuchtungswert (BW) durch Ansteuerung der zumindest einen Lichtquelle (18) auf den vorgegebenen Beleuchtungssollwert (BS) anzupassen, wenn eine Abweichung des aktuellen Beleuchtungswertes (BW) von dem vorgegebenen Beleuchtungssollwert (BS) erfasst wird, wobei
- das System (12) eine weitere Erfassungseinrichtung (22) aufweist, welche dazu eingerichtet ist, einen Umgebungsleuchtwert in einer Umgebung (24) des Fahrzeugs (10) zu erfassen, wobei der Umgebungsleuchtwert in der Umgebung (24) eine Lichtfarbe (K) umfasst, und wobei
- die Steuereinrichtung (14) ferner dazu eingerichtet ist, den aktuellen Beleuchtungswert (BW) durch Ansteuerung der zumindest einen Lichtquelle (18) derart einzustellen, dass eine Lichtfarbe (K) des ausgegebenen Lichts in dem Innenraum (16) des Fahrzeugs (10) an die in der Umgebung des Fahrzeugs erfasste Lichtfarbe angepasst wird,
**dadurch gekennzeichnet, dass**
- das Fahrzeug (10) ferner eine Scheinwerfereinrichtung (28) umfasst, wobei die Steuereinrichtung (14) ferner dazu eingerichtet ist, das durch die Scheinwerfereinrichtung (28) ausgegebene Scheinwerferlicht in Abhängigkeit von dem aktuellen Beleuchtungswert (BW) derart einzustellen, dass Lichtschwankungen in dem Innenraum des Fahrzeuges ausgeglichen und ein Komfort für einen Fahrer oder Passagiere des Fahrzeugs (10) bei der Nutzung des Fahrzeugs (10) erhöht werden.

11. System (12) nach Anspruch 10, **dadurch gekennzeichnet, dass** die zumindest eine Lichtquelle (18) zumindest zwei Leuchtmittel aufweist, welche jeweils eine voneinander verschiedene Grundfarbe aufweisen.

12. Fahrzeug (10) mit einem System (12) zum Einstellen von Lichtverhältnissen des Fahrzeugs (10) nach Anspruch 10 oder 11.

13. Fahrzeug (10) nach Anspruch 12, **dadurch gekennzeichnet, dass** das Fahrzeug (10) als Kraftfahrzeug, insbesondere als Personenkraftwagen, oder als Zug oder als U-Bahn oder als Seilgondel oder als Flugzeug oder als Schiff ausgebildet ist.

## Claims

1. Method for setting light conditions of a vehicle (10) and for providing illumination which compensates for light fluctuations in an interior (16) of the vehicle (10), comprising:
- specifying an illumination target value (BS) of a control device (14) in the interior (16);
- emitting light through at least one light source (18) arranged in the interior (16) in dependence on the illumination target value (BS) specified by the control device (14);
- capturing a current illumination value (BW) in the interior (16) using a capture device (20);
- setting the current illumination value (BW) to the specified illumination target value (BS) by controlling the at least one light source (18) if a deviation of the current illumination value (BS) from the specified illumination target value (BS) is detected;
- capturing an ambient lighting value in a vicinity (24) of the vehicle (10) using a further capture device (22), wherein the ambient lighting value comprises a light colour (K) of the ambient light,
- setting the current illumination value (BW) by controlling the at least one light source (18) in such a way that a light colour (K) of the emitted light in the interior (16) of the vehicle (10) is adapted to a light colour (K) detected in the vicinity (24) of the vehicle (10),
**characterized in that**
- the vehicle (10) further comprises a headlamp device (28), wherein the control device (14) is used to set the headlamp light emitted by the headlamp device (28) in dependence on the current illumination value (BW) in such a way that light fluctuations in the interior of the vehicle are compensated for and a comfort level for a driver or passenger of the vehicle (10) during use of the vehicle (10) is increased.

2. Method according to Claim 1, **characterized in that** the illumination value (BW) further comprises a brightness value (H), wherein the captured current brightness value (H) is set to a specified brightness value of the illumination target value (BS) if a deviation of the current brightness value (H) from the specified brightness value is detected.

3. Method according to Claim 2, **characterized in that**, if the captured brightness value (H) in the interior (16) exceeds a brightness threshold value, the control device (14) controls a darkening device (26) of the vehicle (10) for darkening the interior (16).

4. Method according to Claim 3, **characterized in that** the darkening device comprises a blind of the vehicle (10), which is arranged at a window of the vehicle (10), and/or an electrowetting display, which is arranged in particular at at least one window of the vehicle, preferably at the windscreen and/or at the rear window and/or at one or more side windows of the vehicle, and/or an electrochromic window of the vehicle (10), which is preferably in the form of a windscreen and/or a rear window and/or one or more side windows of the vehicle, wherein, when controlling the electrochromic window and/or the electrowetting display, a degree of transparency of the window and/or a light transmission of the window is set by the control device (14).

5. Method according to any of the preceding claims, **characterized in that** the control device (14) is used to set the headlamp light emitted by the headlamp device (28) in dependence on the ambient lighting value and/or the specified illumination target value (BS) and/or a driving mode of the vehicle (10).

6. Method according to Claim 5, **characterized in that** before or during a change from an autonomous driving mode to a non-autonomous driving mode of the vehicle (10), a brightness of the headlamp light emitted by the headlamp device (28) is set by the control device (14) to be higher than a brightness of the current illumination value (BW) or the specified illumination target value (BS) in the interior (16) of the vehicle (10) if the further capture device (22) detects that the ambient light has a higher brightness than the current illumination value (BW) or the specified illumination target value (BS) in the interior (16) of the vehicle (10).

7. Method according to Claim 5, **characterized in that** a power of the headlamp device (28) and/or a brightness of the headlamp light emitted by the headlamp device (28) is reduced in an autonomous driving mode of the vehicle (10) to a predetermined headlamp illumination target value which in particular is lower than a brightness of a headlamp illumination value of a low beam or high beam with respect to a non-autonomous driving mode.

8. Method according to Claim 5, **characterized in that**, during a change from an autonomous driving mode to a non-autonomous driving mode, the light emitted by the headlamp device (28) is adapted to the specified illumination target value (BS) in the interior (16) of the vehicle (10) using the control device (14).

9. Method according to any of the preceding claims, **characterized in that**, before a change takes place from an autonomous driving mode to a non-autonomous driving mode of the vehicle (10), the illumination target value (BS) is reduced to a further illumination target value, which is lower than the illumination target value.

10. System (12) for setting light conditions of a vehicle (10) and for providing illumination which compensates for light fluctuations in an interior (16) of the vehicle (10), comprising:
- a control device (14), to which an illumination target value (BS) in the interior (16) is provided;
- at least one light source (18), which is arranged in the interior (16) and is configured to emit light in dependence on the illumination target value (BS) specified by the control device (14);
- a capture device (20), which is configured to capture a current illumination value (BW) in the interior (16), wherein
- the control device (14) is further configured to adapt the current illumination value (BW) to the specified illumination target value (BS) by controlling the at least one light source (18) if a deviation of the current illumination value (BW) from the specified illumination target value (BS) is detected, wherein
- the system (12) comprises a further capture device (22), which is configured to capture an ambient lighting value in a vicinity (24) of the vehicle (10), wherein the ambient lighting value in the vicinity (24) comprises a light colour (K), and wherein
- the control device (14) is further configured to set the current illumination value (BW) by controlling the at least one light source (18) in such a way that a light colour (K) of the emitted light in the interior (16) of the vehicle (10) is adapted to the light colour detected in the vicinity of the vehicle,
**characterized in that**
- the vehicle (10) further comprises a headlamp device (28), wherein the control device (14) is further configured to set the headlamp light emitted by the headlamp device (28) in dependence on the current illumination value (BW) in such a way that light fluctuations in the interior of the vehicle are compensated for and a comfort level for a driver or passenger of the vehicle (10) during use of the vehicle (10) is increased.

11. System (12) according to Claim 10, **characterized in that** the at least one light source (18) comprises at least two light-emitting means, which each exhibit a different basic colour.

12. Vehicle (10) comprising a system (12) for setting light conditions of the vehicle (10) according to Claim 10 or 11.

13. Vehicle (10) according to Claim 12, **characterized in that** the vehicle (10) is a motor vehicle, in particular a passenger car, or is a train or an underground train or a gondola lift or an aircraft or a ship.

## Revendications

1. Procédé de réglage de conditions d'éclairage d'un véhicule (10) et de fourniture d'un éclairage qui compense les fluctuations de lumière dans un espace intérieur (16) du véhicule (10), ledit procédé comprenant les étapes suivantes :
- spécifier une valeur d'éclairage de consigne (BS) d'un dispositif de commande (14) dans l'espace intérieur (16) ;
- émettre de la lumière par le biais d'au moins une source de lumière (18) disposée dans l'espace intérieur (16) en fonction de la valeur d'éclairage de consigne (BS) spécifiée par le dispositif de commande (14) ;
- détecter une valeur d'éclairage actuelle (BW) dans l'espace intérieur (16) au moyen d'un dispositif de détection (20) ;
- régler la valeur d'éclairage actuelle (BW) à la valeur d'éclairage de consigne prédéterminée (BS) par commande de l'au moins une source de lumière (18) lorsqu'un écart entre la valeur d'éclairage actuelle (BS) et la valeur d'éclairage de consigne spécifiée (BS) est détecté ;
- détecter une valeur de luminosité ambiante dans un environnement (24) du véhicule (10) au moyen d'un autre dispositif de détection (22), la valeur de luminosité ambiante comprenant une couleur de lumière (K) de la lumière ambiante,
- régler la valeur d'éclairage actuelle (BW) par commande de l'au moins une source de lumière (18) de manière à ce qu'une couleur de lumière (K) de la lumière émise dans l'espace intérieur (16) du véhicule (10) soit réglée à une couleur de lumière (K) détectée dans l'environnement (24) du véhicule (10),
**caractérisé en ce que**
- le véhicule (10) comprend en outre un dispositif formant phare (28), la lumière du phare émise par le dispositif formant phare (28) étant réglée par le dispositif de commande (14) en fonction de la valeur d'éclairage actuelle (BW) de manière à ce que les fluctuations de lumière dans l'espace intérieur du véhicule soient compensées et qu'un confort d'un conducteur ou de passagers du véhicule (10) puisse être augmenté lors de l'utilisation du véhicule (10).

2. Procédé selon la revendication 1, **caractérisé en ce que** la valeur d'éclairement (BW) comprend en outre une valeur de luminosité (H), la valeur de luminosité actuelle détectée (H) étant réglée à une valeur de luminosité spécifiée de la valeur d'éclairage de consigne (BS) lorsqu'un écart entre la valeur de luminosité actuelle (H) et la valeur de luminosité spécifiée est détecté.

3. Procédé selon la revendication 2, **caractérisé en ce que**, si la valeur de luminosité détectée (H) dans l'espace intérieur (16) dépasse un seuil de luminosité, le dispositif de commande (14) commande un dispositif d'assombrissement (26) du véhicule (10) afin d'assombrir l'espace intérieur (16).

4. Procédé selon la revendication 3, **caractérisé en ce que** le dispositif d'assombrissement comprend un store du véhicule (10), qui est disposé sur une vitre du véhicule (10), et/ou un afficheur à électromouillage, qui est disposé notamment sur au moins une vitre du véhicule, de préférence sur le pare-brise et/ou sur la lunette arrière et/ou sur une ou plusieurs vitres latérales du véhicule, et/ou une vitre électrochrome du véhicule (10), qui est conçue de préférence comme pare-brise et/ou comme lunette arrière et/ou comme une ou plusieurs vitres latérales du véhicule, un degré de transparence de la vitre et/ou une transmission de lumière de la vitre étant réglés par le dispositif de commande (14) lors de la commande de la vitre électrochrome et/ou de l'affichage à électromouillage.

5. Procédé selon l'une des revendications précédentes, **caractérisé en ce que** la lumière du phare émise par le dispositif formant phare (28) est réglée par le dispositif de commande (14) en fonction de la valeur de luminosité ambiante et/ou de la valeur d'éclairage de consigne spécifiée (BS) et/ou d'un mode de conduite du véhicule (10).

6. Procédé selon la revendication 5, **caractérisé en ce que**, avant ou pendant le passage d'un mode de conduite autonome à un mode de conduite non autonome du véhicule (10), une luminosité de la lumière du phare émise par le dispositif formant phare (28) est réglée par le dispositif de commande (14) pour être supérieure à une luminosité de la valeur d'éclairage actuelle (BW) ou de la valeur d'éclairage de consigne spécifiée (BS) dans l'espace intérieur (16) du véhicule (10), si l'autre dispositif de détection (22) détecte que la lumière ambiante a une luminosité supérieure à la valeur d'éclairage actuelle (BW) ou la valeur d'éclairage de consigne spécifiée (BS) dans l'espace intérieur (16) du véhicule (10).

7. Procédé selon la revendication 5, **caractérisé en ce qu'**une puissance du dispositif formant phare (28) et/ou une luminosité de la lumière du phare émise par le dispositif formant phare (28) dans un mode de conduite autonome du véhicule (10) est réduite par rapport à un mode de conduite non autonome à une valeur d'éclairage de phare de consigne spécifiée, qui est en particulier inférieure à une luminosité d'une valeur d'éclairage de phare d'un feu de croisement ou d'un feu de route.

8. Procédé selon la revendication 5, **caractérisé en ce que**, lors du passage d'un mode de conduite autonome à un mode de conduite non autonome, la lumière émise par le dispositif formant phare (28) est réglée à la valeur d'éclairage de consigne spécifiée (BS) dans l'espace intérieur (16) du véhicule (10) par le dispositif de commande (14).

9. Procédé selon l'une des revendications précédentes, **caractérisé en ce que**, avant un passage d'un mode de conduite autonome à un mode de conduite non autonome du véhicule (10), la valeur d'éclairage de consigne (BS) est réduite à un autre valeur d'éclairage de consigne inférieure à la valeur d'éclairage de consigne.

10. Système (12) destiné à régler des conditions d'éclairage d'un véhicule (10) et à fournir un éclairage qui compense les fluctuations de lumière dans un espace intérieur (16) du véhicule (10), ledit système comprenant :
- un dispositif de commande (14) auquel est spécifiée une valeur d'éclairage de consigne (BS) dans l'espace intérieur (16) ;
- au moins une source de lumière (18) qui est disposée dans l'espace intérieur (16) et qui est conçue pour émettre de la lumière en fonction de la valeur d'éclairage de consigne (BS) spécifiée par le dispositif de commande (14) ;
- un dispositif de détection (20) qui est conçu pour détecter une valeur d'éclairage actuelle (BW) dans l'espace intérieur (16),
- le dispositif de commande (14) étant en outre conçu pour régler la valeur d'éclairage actuelle (BW) à la valeur d'éclairage de consigne spécifiée (BS) par commande de l'au moins une source de lumière (18) lorsqu'un écart entre la valeur d'éclairage actuelle (BW) et la valeur d'éclairage de consigne spécifiée (BS) est détecté,
- le système (12) comportant un autre dispositif de détection (22) qui est conçu pour détecter une valeur de luminosité ambiante dans un environnement (24) du véhicule (10), la valeur de luminosité ambiante dans l'environnement (24) comprenant une couleur de lumière (K), et
- le dispositif de commande (14) étant en outre conçu pour régler la valeur d'éclairage actuelle (BW) en commandant l'au moins une source de lumière (18) de manière à ce qu'une couleur de lumière (K) de la lumière émise dans l'espace intérieur (16) du véhicule (10) soit réglée à la couleur de la lumière détectée dans l'environnement du véhicule,
**caractérisé en ce que**
- le véhicule (10) comprend en outre un dispositif formant phare (28), le dispositif de commande (14) étant en outre conçu pour régler la lumière du phare émise par le dispositif formant phare (28) en fonction de la valeur d'éclairage actuelle (BW) de manière à ce que les fluctuations de lumière dans l'espace intérieur du véhicule soient compensées et qu'un confort d'un conducteur ou de passagers du véhicule (10) puisse être augmenté lors de l'utilisation du véhicule (10).

11. Système (12) selon la revendication 10, **caractérisé en ce que** l'au moins une source de lumière (18) comporte au moins deux lampes qui ont chacune une couleur de base différente.

12. Véhicule (10) comprenant un système (12) destiné à régler des conditions d'éclairage du véhicule (10) selon la revendication 10 ou 11.

13. Véhicule (10) selon la revendication 12, **caractérisé en ce que** le véhicule (10) est conçu comme un véhicule automobile, notamment comme une voiture de tourisme, ou comme un train ou comme un métro ou comme une télécabine ou comme un avion ou comme un navire.
